# EUROPEAN PATENT SPECIFICATION

(11) **EP 1 867 262 B1**
(45) Date of publication and mention of the grant of the patent: **28.04.2010**
(21) Application number: 07110113.3
(22) Date of filing: 12.06.2007
(51) Int. Cl.: A47J 31/54

(54) **Machine for the production of water-based drinks and relative method**
Gerät zur Herstellung von Getränken auf Wasserbasis und entsprechendes Verfahren
Machine pour la fabrication des boissons à base d'eau et procédé correspondant

(30) Priority: 14.06.2006 IT UD20060154
(43) Date of publication of application: 19.12.2007
(73) Proprietor: ILLYCAFFE' S.p.A., I-34147 Trieste (IT)
(72) Inventor: De Luca, Riccardo, 34070, Doberdò del Lago (GO) (IT); Mastropasqua, Luca, 34123, Trieste (IT); Suggi Liverani, Furio, 34123, Trieste (IT)
(74) Representative: Petraz, Gilberto Luigi

(56) References cited:
- US-A- 4 757 754
- US-A1- 2006 037 481

## Description

### FIELD OF THE INVENTION

The present invention concerns a machine for the production of water-based drinks, hot and/or cold, such as for example espresso coffee, tea, chocolate, tisanes, creams, which is able to control and regulate, to values desired by the producer and/or the user, both the flow of water and also the working pressure of the water delivered in order to prepare the above drink.

### BACKGROUND OF THE INVENTION

Machines for the production of espresso coffee are known, see e.g. US 4 757 754 A, , which are provided with a tank for the water from which, by means of a pump, the water is delivered at high pressure to a heating unit. From the latter hot water and/or steam is obtained, which is used in a coffee extraction unit, where it is percolated through the powdered coffee, or coffee pod, to produce the espresso coffee.

In such coffee machines, the possibility of delivering, automatically, a known quantity of coffee, that is, of delivering a known quantity of water to the heating unit and from here to the extraction unit, is a characteristic greatly appreciated by users, because this allows them to decide in advance how much drink to prepare, without having to intervene manually in order to stop the delivery.

Moreover, the correct dosage of water enhances to the utmost the preparation of the coffee, contrary to an over/under extraction from a pre-determined dose of powdered coffee or other.

To this purpose, coffee machines for espresso coffee are known, in which said function of controlling the dosage of water is achieved by means of an inline flow measurer in the hydraulic circuit downstream of the delivery pump, also called "volumetric meter" or flow-meter.

The flow-meter is provided with a small turbine introduced into the pick-up circuit of the water from the tank to the pump. By counting the revs made by the turbine in the unit of time, the flow of water can be deduced or a pre-determined number of revs can be counted, which correspond to a given total volume of water that has flowed.

One disadvantage of said known machines is that the flow-meter supplies flow values with poor linearity, especially for low flow rates, for example between about 1 and 5 cc/sec, which cannot be measured with great accuracy.

Moreover, since it substantially consists of a moving mechanical member, the flow-meter can easily be blocked up by deposits of salts dissolved in the water, and also the formation of algae and the deposit of micro-organisms.

The flow-meter also has a performance that deteriorates over time and therefore needs frequent adjustments and maintenance.

Moreover, in the above known machines, especially those used in the professional field, there is a need to operate with the water in the pick-up circuit at constant pressure, so as to have high organoleptic properties of the coffee extraction and optimum repeatability of the coffee percolation, without the pressure and flow of the extraction water being affected by the coffee in powder or in the pod, which normally acts as a hydraulic obstruction in the water circuit.

To this purpose, in known machines there is also a pressure limitation valve, which has the function of discharging the excess water from the hydraulic circuit, in order to take the pressure level to the desired value.

Finally, in said known machines, there is also a sensor used to detect the presence of the water, which controls whether the heating unit is saturated with water, in order to safeguard the heating resistance inside it, which, if activated without liquid, risks being damaged.

One purpose of the present invention is to achieve a machine for the production of drinks, hot and/or cold, such as espresso coffee, tea, chocolate, tisanes, creams, or other, and a relative production method, which allow, automatically, to measure the water delivered accurately, even for low flow rates, in order to have a repeatable dosage of the water, a reliable regulation of the dosage and a limited or zero external maintenance intervention.

Another purpose of the present invention is to achieve a machine for the production of drinks, hot and/or cold, and a relative production method, which allow to operate, with great accuracy, with the water pressure substantially constant in the hydraulic circuit, and which is reliable, economical, simple in construction and which needs limited or no maintenance.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

The present invention is applicable to a machine for the production of water-based drinks, which comprises at least a tank for the water and at least an extraction unit for the extraction of aromas.

The water is fed from said tank towards the extraction unit by pump means, along a hydraulic circuit, for the preparation of said drink.

The machine according to the present invention also comprises a command and control unit, which is able to regulate at least the flow and pressure of water at outlet from said pump means to said extraction unit.

Moreover, the machine can be also provided with a possible heating unit disposed upstream of the extraction unit.

According to the present invention, the machine also comprises pressure sensor means, which is able to detect at least a pressure value of the water in the hydraulic circuit and to send said pressure value to said command and control unit, in order to at least partly condition at least one functioning factor of the pump means.

According to a variant of the invention, the pressure sensor means is able to continuously detect a plurality of pressure values of the water in the hydraulic circuit.

The command and control unit is able to at least receive and process said pressure value.

One part of the command and control unit is also able to function as a power switch so as to selectively command and regulate said pump means, also according to said pressure value detected.

According to the present invention, in the command and control unit, a plurality of pre-determined data are also memorized, correlating the values of flow of the water at outlet from said pump means, pressure values of the water in the hydraulic circuit downstream of the pump means, and values of the ratio between the instantaneous power and the nominal power delivered by said pump means.

Advantageously, therefore, from said correlation data and by measuring the pressure of the circuit downstream of the pump means, by means of the sensor means, it is possible to calculate the values of instantaneous flow of water in transit in the circuit, that is, fed to the extraction unit.

From the instantaneous flow values, the command and control unit is able to deduce the volume of water delivered, over a determinate period of time, for the preparation of the drink.

In this way, we obtain a machine for the preparation of drinks which allows, automatically, an accurate calculation of the flow of water delivered for the preparation of the drink, even at low flow rates, a repeatable dosage of the water and a reliable regulation of the dosage.

Moreover, there is no need to use flow measurers with moving parts and in this way the need for maintenance on the machine is reduced.

Advantageously, moreover, by means of the pressure measurements of the sensor means and said correlation data, processed by the command and control unit, it is possible to operate with the pressure in the hydraulic circuit substantially constant and to calculate with great accuracy the flow delivered by the pump means and hence dose the volume of drink produced.

To this purpose, at least a measurement of the pressure value of the water at outlet from said pump means is carried out, by means of the sensor means.

According to an advantageous variant of the invention, a plurality of pressure measurements are carried out continuously.

Subsequently, according to the pressure value measured by said sensor means, the command and control unit conditions the functioning of the pump means, so that the pressure of the water in the circuit downstream of the latter is substantially constant at a pre-determined value chosen by the user.

According to a variant of the invention, the command and control unit, according to the pressure value measured by said sensor means, conditions the functioning of the pump means in order to modulate the pressure profile during delivery.

Finally, by means of said command and control unit, the flow of water at outlet from said pump means is calculated and controlled, according to said correlation data and the pre-determined constant pressure value.

Thus, advantageously, the pressure in the circuit is measured and is stabilized at a constant value, automatically and continuously during the delivery of the water and, indirectly, the instantaneous flow of water is also calculated, given that the percentage reduction in the power applied to the pump means is known. Finally, from the instantaneous flow it is possible to deduce the volume delivered in a determinate interval of time for the preparation of the drink.

In this way, the pressure of the water in the circuit is determined by the user himself, and not by other factors, such as for example the presence of the pod of powdered coffee in the extraction unit of the machine.

Advantageously, moreover, by using the pressure sensor means there is no moving mechanical member which measures the pressure in the circuit, and therefore the measurement of the latter is very accurate and repeatable.

Advantageously, a lesser wear of the pump means is also obtained, which, since it is regulated automatically, is activated only when necessary; the invention also obtains a reduced noisiness of the pump means.

Advantageously, moreover, by means of the present invention, the use of the pressure sensor means allows to eliminate the use of the pressure limiting valve in professional coffee machines.

Indeed, the pressure sensor means according to the present invention, together with the command and control unit, are able to condition the functioning of the pump means automatically, taking the pressure to the desired constant value and eliminating the mechanical regulation, with considerable simplification, thus increasing the reliability and economy of the machine.

Moreover, the sensor means allows to verify, once the water has been pumped into the heating unit, whether the container of the heating unit is full of water and, by evaluating whether the pressure goes above the normal pressure that water has at working temperature, it is possible to deduce the presence of water, also considering the fact that the pressure in the circuit is not due to air, which cannot be pumped by the pump means.

Therefore, by adopting pressure sensor means, it is also advantageously possible to eliminate the water sensor found in known machines, thus increasing constructional simplicity and reliability.

According to another feature of the present invention, a method for the production of water-based drinks is advantageous and innovative, which regulates the flow of water delivered by pump means towards an extraction unit of a machine for the production of said drinks, and comprises:
- a first step in which at least a measurement is made of the pressure value of the water at outlet from said pump means, by pressure sensor means;
- a second step in which, by means of a command and control unit, the flow of water at outlet from said pump means is controlled, according to said at least one measurement of the pressure value of the water at outlet from said pump means, by means of a characteristic curve of said pump means memorized in said command and control unit.

According to a variant of the method according to the invention, said second step can be replaced by:
- a step in which the water pressure at outlet from said pump means is regulated by means of a command and control unit, according to the pressure value measured by said sensor means, in order to keep said pressure value substantially constant at a pre-determined value; and
- a further step in which, by means of said command and control unit, the flow of water at outlet from said pump means is calculated and controlled, according to the ratio between the instantaneous power and the nominal power delivered by said pump means and the pre-determined constant pressure value.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of the machine according to the present invention;
- fig. 2 is a functioning diagram of a part of the machine in fig. 1; and
- fig. 3 is another functioning diagram of a part of the machine in fig. 1.

### DETAILED DESCRIPTION OF A PREFERENTIAL FORM OF EMBODIMENT

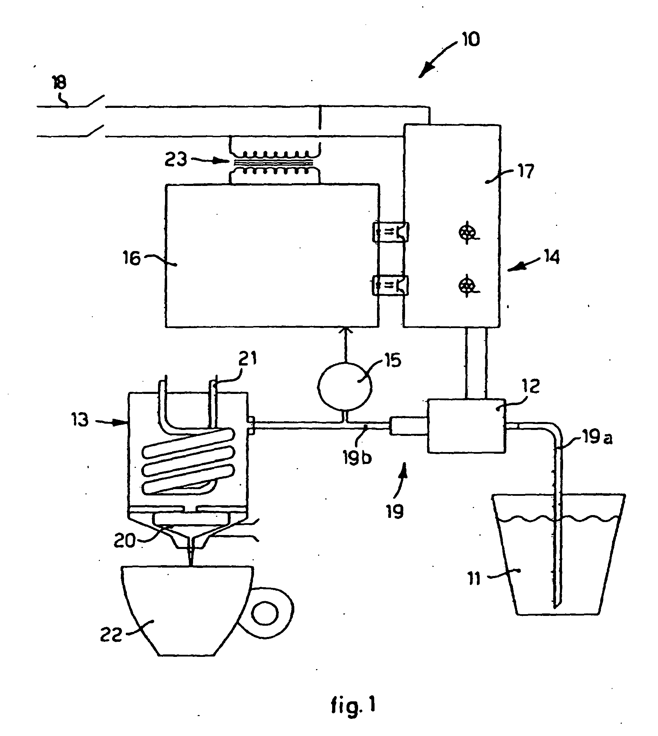

According to the present invention, fig. 1 shows a machine 10 for the production of water-based drinks such as coffee, espresso coffee, that is, prepared automatically, including the decaffeinated type, tea, chocolate, tisanes or creams.

The machine 10 comprises a tank 11 for the water, at least a boiler 13 to heat the water, equipped with heating resistances 21, and a vibration pump 12 of the pulsating type, able to transfer the water at pressure from the tank 11 to said heating unit 13 along a hydraulic circuit 19a, 19b, in which 19a indicates a first portion of circuit upstream of the pump 12 and 19b indicates a second portion of the circuit, downstream of the pump.

The hot water or steam reaches an extraction unit 20, also part of the second portion 19b, in which contact occurs with a base component and the extraction of the aromas from the latter, in this case a pod of powdered coffee, to produce the drink, in this case espresso coffee, which then percolates and flows into a collection cup 22.

The energy for the functioning of the machine is fed to the machine 10 by means of a connection with a feeder 23, in turn connected to an electric network 18, energy accumulators, generating units or other.

The machine 10 is controlled, in its main functions, by a command and control unit 14, which is also able to regulate the flow and pressure of water at outlet from the pump.

To this purpose, the machine 10 comprises at least a pressure sensor 15, such as for example a pressure transducer, extensometer, piezoelectric, piezoresistive.

The pressure sensor 15 is able to detect the pressure of the water in the circuit 19b downstream of the pump 12, that is, at least a pressure value of the water at outlet from the pump 12. The pressure sensor 15 is also able to send said pressure value, in the form of an electric or electronic signal, to the command and control unit 14.

Advantageously, the pressure sensor 15 continuously measures and sends the pressure values of the water to the command and control unit 14.

According to another variant of the present invention, the command and control unit 14 comprises a microprocessor 16 which, during normal functioning of the machine 10, receives and processes at least the pressure value sent, continuously, from the pressure sensor 15.

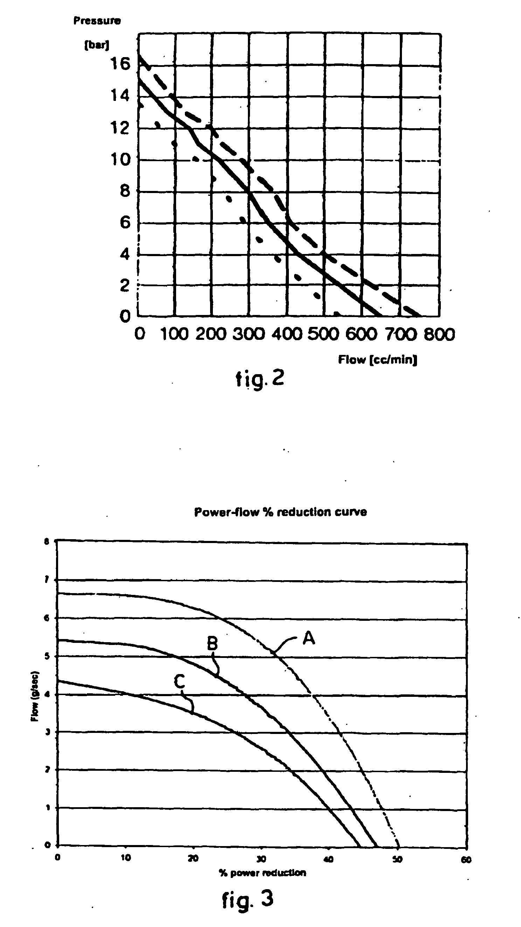

The microprocessor 16, according to the characteristic flow-prevalence curve of the pump 12 (fig. 2), known by the constructor of the pump 12 and advantageously memorized in suitable memorization means in the microprocessor 16, not shown in the drawings, is able to calculate the instantaneous flow of the water delivered by the pump 12.

According to these instantaneous flow values, the microprocessor 16, integrating on the delivery time period, is able to calculate the overall flow of water delivered, and thus stop the delivery of water by the pump 12 at a predefined value able to be selected by the user, for example in order to achieve with great accuracy a so-called "short", strong coffee, that is, with about 20-25 cc of water, normal or "long" coffee, that is with about 40 cc of water.

The Applicant has studied and discovered that the optimum overall flow of water, to obtain a coffee of excellent organoleptic qualities, is about 1 cc/sec.

This operating mode is suitable to the case when it is not required to operate at constant pressure in the machine 10, or when it is the pod of coffee in the extraction unit 20 which, substantially, determines the conditions of water pressure and flow in the circuit downstream of the pump 12.

According to a variant of the invention, it is advantageous to operate at constant pressure of the water in the circuit 19b, in order to obtain a high repeatability of the operation to produce the drink, in this case the percolation of the coffee, that is, rendering the pressure in the circuit independent of the influence of the pod of powdered coffee, which otherwise determines both the flow and the pressure of the water.

To operate at constant water pressure in the circuit 19b downstream of the pump 12, it is possible to measure the water pressure by means of said pressure sensor 15 and at least one functioning factor of the pump 12 is conditioned, for example by partly reducing the power of the pump 12, so as to reduce the flow and pressure of water in the circuit 19b. To this purpose, the command and control unit 14 advantageously implements an automatic control in feedback, for example of the PID type, that is, a proportional, integral and derivative control.

To selectively condition the pump 12 so as to regulate and possibly stop the flow of water at outlet from the pump 12 and regulate the pressure of the water, the command and control unit 14 also comprises a power switch 17, for example of the bi-directional triode thyristor type, that is, TRIAC, which cooperates with said microprocessor (fig. 1).

The power switch 17 can act on the pump 12, modulating or selectively varying the drive power thereof, for example by varying and reducing the power so as to reduce and maintain the pressure at a constant value desired by the user.

Applicant has studied and discovered that the optimum pressure of the water, so as to obtain a coffee with excellent organoleptic qualities, is comprised between about 9 and 10 bar.

In this way, however, operating with the machine 10 at constant pressure by reducing the power applied to the pump 12, the prevalence-flow curves supplied by the producer of the pump 12, since they are taken at nominal power of the pump, that is, full power, are not valid to deduce the instantaneous flow as described above.

To obviate this, according to another variant of the present invention, in the memorization means of the microprocessor 16 a plurality of data are memorized, in the form of functions, or diagrams of data or families of curves (fig. 3). These functions put in correlation the value of instantaneous flow with the value of instantaneous power applied to the pump 12, advantageously with the percentage ratio between instantaneous power and nominal power. This occurs by means of curves parameterized on determinate values of constant pressure, for example three curves A, B, C, respectively at about 5, 8 and 10 bar, in this case extrapolated from experimental data based on polynomial models.

In this way, the microprocessor 16 is able to calculate the instantaneous flow delivered by the pump 12 and from this, as said, by integration over an interval of time, the total value of water delivered. In fact, the microprocessor 16 operates on the basis of the operating pressure value supplied by the pressure sensor 15, which value is advantageously comprised and maintained constant at a value in the optimum range between about 9 and 10 bar, and on the basis of the same value of instantaneous power applied, known by the microprocessor 16 and the power switch 17, in order to obtain said constant pressure value. The same microprocessor 16 is able to consult and process said memorized data, that is, the family of curves that correlate instantaneous flow and percentage ratio of power reduction, parameterized to constant pressure.

It is clear that modifications and/or additions of parts may be made to the machine 10 for the production of drinks as described heretofore, without departing from the subject-matter of the present invention, as defined by the following claims.

## Claims

1. Machine for the production of water-based drinks comprising:
- at least a tank (11) for the water;
- at least an extraction unit (20);
- pump means (12) able to transfer the water at pressure, along a hydraulic circuit (19a, 19b), from said tank (11) towards said extraction unit (20);
- a command and control unit (14) able to regulate the flow and the pressure of the water at outlet from said pump means (12) towards said extraction unit (20);
the machine further comprising sensor means (15) able to detect at least a pressure value of the water in said circuit (19a, 19) and to send said pressure value to said command and control unit (14), in order to at least partly condition at least one functioning factor of said pump mean (12), wherein said command and control unit (14) comprises at least a processing device (16) able at least to receive and process said pressure value, and an electronic device (17) cooperating with said processing device (16) and able to function as a power switch to selectively command and regulate said pump means (12), **characterized in that** said processing device (16) comprises electronic memorization means in which are memorized a plurality of pre-determined correlation data between flow values of the water at outlet from said pump means, pressure values of the water at outlet from said pump means (12) and values of the ratio between the instantaneous power and nominal power delivered by said pump means (12).

2. Machine as in claim 1, **characterized in that** it further comprises a heating unit (13) disposed upstream of said extraction unit (20) and able to heat said water.

3. Machine as in claim 1 or 2, **characterized in that** said sensor means (15) is positioned in a part (19b) of said circuit (19a, 19b) downstream of said pump means (12).

4. Machine as in claim 3, **characterized in that** said electronic device comprises a bi-directional triode thyristore (17).

5. Method for the production of water-based drinks by means of the regulation of the flow of water delivered by pump means (12) to an extraction unit (20) of a machine (10) for the production of said drinks, **characterized in that** it comprises the steps of:
- effecting at least a measurement of the pressure value of the water at outlet from said pump means (12), by means of pressure sensor means (15);
- effecting by means of a command and control unit (14), a control of the flow of water at outlet from said pump means (12), according to said at least one measurement of the pressure value of the water at outlet from said pump means (12), by means of a characterise curve of said pump means (12) memorized in said command and control unit (14).

6. Method for the production or water-based drinks by means of the regulation of the flow of water delivered by pump means (12) to an extraction unit (20) of a machine (10) for the production of said drinks, **characterized in that** it comprises the steps of:
- effecting at least a measurement of the pressure value of the water at outlet from said pump means (12), by means of pressure sensor means (15);
- effecting a regulation of the pressure of the water at outlet from said pump means (12) by means of a command and control unit (14), according to the pressure value measured by means of said sensor means (15), in order to keep said pressure value substantially constant at a pre-determined value;
- effecting, by means of said command and control unit (14), a calculation and control of the flow of water at outlet from said pump means (12), according to the ratio between the instantaneous power and the nominal power delivered by said pump means (12) and the pre-determined constant pressure value.

## Patentansprüche

1. Gerät zur Herstellung von Getränken auf Wasserbasis mit
mindestens einem Behälter (11) für das Wasser;
mindestens einer Aufgusseinheit (20);
einer Pumpvorrichtung (12), die dazu ausgelegt ist, das Wasser unter Druck entlang eines Flüssigkeitskreislaufs (19a, 19b) vom Behälter (11) zur Aufgusseinheit (20) zu leiten;
einer Befehls- und Steuereinheit (14), die dazu ausgelegt ist, den Fluss und den Druck des Wassers am Auslass der Pumpvorrichtung (12) in Richtung der Aufgusseinheit (20) zu regulieren;
einer Sensorvorrichtung (15), die dazu ausgelegt ist, mindestens einen Druckwert des Wassers im Kreislauf (19a, 19b) zu bestimmen und den Druckwert an die Befehls- und Steuereinheit (14) zu senden, um zumindest teilweise wenigstens eine Einflussgröße der Pumpvorrichtung (12) festzusetzen, wobei die Befehls- und Steuereinheit (14) wenigstens eine Verarbeitungsvorrichtung (16) aufweist, die zumindest dazu ausgelegt ist, den Druckwert zu empfangen und zu verarbeiten, und
einer elektronischen Einrichtung (17), die mit der Verarbeitungsvorrichtung (16) zusammenarbeitet und dazu ausgelegt ist, als Netzschalter zu fungieren, um die Pumpvorrichtung (12) wahlweise anzusteuern und zu regulieren,
**dadurch gekennzeichnet, dass** die Verarbeitungsvorrichtung (16) eine elektronische Speichervorrichtung enthält, um eine Vielzahl von vorbestimmten Korrelationsdaten zwischen Durchflusswerten des Wassers am Auslass der Pumpvorrichtung, Wasserdruckwerten am Auslass der Pumpvorrichtung (12) und Werten, die das Verhältnis der durch die Pumpvorrichtung (12) gelieferten Momentanleistung zur Nominalleistung beschreiben, zu speichern.

2. Gerät nach Anspruch 1, ferner mit einer der Aufgusseinheit (20) vorgeschalteten Beheizungseinheit (13), die dazu ausgelegt ist, das Wasser aufzuheizen.

3. Gerät nach Anspruch 1 oder 2, wobei die Sensorvorrichtung (15) in einem Teil (19b) des Kreislaufs (19a, 19b) positioniert ist, der der Pumpvorrichtung (12) nachgeschaltet ist.

4. Gerät nach Anspruch 3, wobei die elektronische Einrichtung eine bidirektionale Thyristortriode (17) aufweist.

5. Verfahren zur Herstellung von Getränken auf Wasserbasis durch Regulieren des mittels einer Pumpvorrichtung (12) gelieferten Wasserflusses zu einer Aufgusseinheit (20) eines Geräts (10) zur Herstellung der Getränke, **dadurch gekennzeichnet, dass**
durch eine Drucksensorvorrichtung (15) mindestens eine Messung des Wasserdruckwerts am Auslass der Pumpvorrichtung (12) durchgeführt wird;
durch eine Befehls- und Steuereinheit (14) eine Steuerung des Wasserdurchflusses am Auslass der Pumpvorrichtung (12) gemäß der mindestens einen Messung des Wasserdruckwerts am Auslass der Pumpvorrichtung (12) mittels einer charakteristischen Kurve der Pumpvorrichtung (12) durchgeführt wird, die in der Befehls- und Steuereinheit (14) gespeichert ist.

6. Verfahren zur Herstellung von Getränken auf Wasserbasis durch Regulieren des mittels einer Pumpvorrichtung (12) gelieferten Wasserflusses zu einer Aufgusseinheit (20) eines Geräts (10) zur Herstellung der Getränke, **dadurch gekennzeichnet, dass**
durch eine Drucksensorvorrichtung (15) mindestens eine Messung des Wasserdruckwerts am Auslass der Pumpvorrichtung (12) durchgeführt wird;
durch eine Befehls- und Steuereinheit (14) eine Regulierung des Wasserdruckwerts am Auslass der Pumpvorrichtung (12) gemäß des durch die Sensorvorrichtung (15) gemessenen Druckwerts durchgeführt wird, um den Druck im Wesentlichen konstant auf einem vorbestimmten Wert zu halten;
durch die Befehls- und Steuereinheit (14) eine Berechnung und Steuerung des Wasserdurchflusses am Auslass der Pumpvorrichtung (12) gemäß dem Verhältnis zwischen der durch die Pumpvorrichtung (12) gelieferten Momentan- und Nominalleistung und dem vorbestimmten konstanten Druckwert durchgeführt wird.

## Revendications

1. Machine pour la fabrication de boissons à base d'eau, comprenant :
- au moins un réservoir (11) pour l'eau ;
- au moins une unité d'extraction (20) ;
- un moyen de pompage (12) apte à transférer l'eau sous pression, le long d'un circuit hydraulique (19a, 19b), dudit réservoir (11) vers ladite unité d'extraction (20) ;
- une unité de commande et de contrôle (14) apte à réguler le débit et la pression de l'eau en sortie dudit moyen de pompage (12) et en direction de ladite unité d'extraction (20) ; la machine comprenant en outre un moyen capteur (15) apte à détecter au moins une valeur de pression de l'eau dans ledit circuit (19a, 19b) et à envoyer ladite valeur de pression à ladite unité de commande et de contrôle (14), en vue de conditionner au moins partiellement l'un au moins des facteurs de fonctionnement dudit moyen de pompage (12), ladite unité de commande et de contrôle (14) comprenant au moins un dispositif de traitement (16) au moins apte à recevoir et traiter ladite valeur de pression, et un dispositif électronique (17) coopérant avec ledit dispositif de traitement (16) et apte à jouer le rôle de commutateur électrique pour commander et réguler sélectivement ledit moyen de pompage (12), **caractérisée en ce que** ledit dispositif de traitement (16) comprend un moyen de mémorisation électronique dans lequel est mémorisée une pluralité de données de corrélation prédéfinies entre les valeurs de débit de l'eau en sortie dudit moyen de pompage, les valeurs de pression de l'eau en sortie dudit moyen de pompage (12) et les valeurs du rapport entre la puissance instantanée et la puissance nominale fournies par ledit moyen de pompage (12).

2. Machine selon la revendication 1, **caractérisée en ce qu'**elle comprend en outre une unité de chauffage (12) installé en amont de ladite unité d'extraction (20) et apte à chauffer ladite eau.

3. Machine selon la revendication 1 ou 2, **caractérisée en ce que** ledit moyen capteur (15) est placé dans une partie (19b) dudit circuit (19a, 19b), en aval dudit moyen de pompage (12).

4. Machine selon la revendication 3, **caractérisée en ce que** ledit dispositif électronique comprend un thyristor-triode bidirectionnel (17).

5. Procédé de fabrication de boissons à base d'eau par régulation du débit d'eau fourni par un moyen de pompage (12) à une unité d'extraction (20) d'une machine (10) pour la fabrication desdites boissons, **caractérisé en ce qu'**il comprend les étapes consistant à :
- effectuer au moins une mesure de la valeur de pression de l'eau en sortie dudit moyen de pompage (12), à l'aide du moyen capteur de pression (15) ;
- effectuer, à l'aide de l'unité de commande et de contrôle (14), un contrôle du débit de l'eau en sortie dudit moyen de pompage (12), en fonction de ladite au moins une mesure de la valeur de pression de l'eau en sortie dudit moyen de pompage (12), à l'aide d'une courbe caractéristique dudit moyen de pompage (12) mémorisée dans ladite unité de commande et de contrôle (14).

6. Procédé de fabrication de boissons à base d'eau par régulation du débit d'eau fourni par un moyen de pompage (12) à une unité d'extraction (20) d'une machine (10) pour la fabrication desdites boissons, **caractérisé en ce qu'**il comprend les étapes consistant à :
- effectuer au moins une mesure de la valeur de pression de l'eau en sortie dudit moyen de pompage (12), à l'aide du moyen capteur de pression (15) ;
- effectuer une régulation de la pression d'eau en sortie dudit moyen de pompage (12) à l'aide d'une unité de commande et de contrôle (14), en fonction de la valeur de pression mesurée par ledit moyen capteur (15), afin maintenir ladite valeur de pression sensiblement constante à une valeur prédéfinie ;
- effectuer, à l'aide de ladite unité de commande et de contrôle (14), un calcul et un contrôle du débit d'eau en sortie dudit moyen de pompage (12), en fonction du rapport entre la puissance instantanée et la puissance nominale fournies par ledit moyen de pompage (12), et la valeur de pression constante prédéfinie.
